# EUROPÄISCHE PATENTSCHRIFT

(11) **EP 3 254 838 B1**
(45) Veröffentlichungstag und Bekanntmachung des Hinweises auf die Patenterteilung: **27.01.2021**
(21) Anmeldenummer: 17172261.4
(22) Anmeldetag: 22.05.2017
(51) Int. Cl.: B30B 15/06, B65B 29/02, A47J 31/06

(54) **FÜLLEINRICHTUNG ZUM BEFÜLLEN VON WIEDERVERWENDBAREN KAFFEEKAPSELN**
FILLING DEVICE FOR FILLING REUSABLE COFFEE CAPSULES
DISPOSITIF DE REMPLISSAGE POUR DES CAPSULES DE CAFÉ RÉUTILISABLES

(30) Priorität: 20.05.2016 DE 202016102710 U
(43) Veröffentlichungstag der Anmeldung: 13.12.2017
(73) Patentinhaber: Kobler, Piero, 93059 Regensburg (DE)
(72) Erfinder: Kobler, Piero, 93059 Regensburg (DE)
(74) Vertreter: Bittner, Bernhard

(56) Entgegenhaltungen:
- DE-A1-102013 005 597
- FR-A1- 2 895 660
- US-A1- 2011 209 623
- US-B1- 9 586 709

## Beschreibung

Die vorliegende Erfindung bezieht sich auf eine Fülleinrichtung zum Befüllen sowie eine Entleereinrichtung zum Entleeren von Kaffeekapseln, insbesondere von wiederverwendbaren bzw. nachfüllbaren Kaffeekapseln. Grundsätzlich inbegriffen sollen dabei auch Kapseln für das Aufbrühen nicht nur koffeinhaltiger sondern auch anderer Heißgetränkespezialitäten wie etwa Teeextrakte sein. Aus dem Stand der Technik ist es bereits bekannt, anstelle der von den Herstellern der jeweiligen Portionskaffeemaschinen vertriebenen, lediglich einmalig verwendbaren Kaffeekapseln, wiederverwendbare Kaffeekapseln anzubieten, die nach einem Brühvorgang in der Portionskaffeemaschine von dem Verbraucher selbst entleert und wieder befüllt werden können.

Nichttrivial ist bei den wiederverwendbaren Kaffeekapseln dabei, wie der von den Herstellern in der Einwegkapsel selbst integrierte Teil des Filtersystems in Form des Kapseldeckels, zumeist einer Metallfolie (aus Alu, Polypropylen, Verbundmaterial), der mit dem weiteren Teil des in der Portionskaffeemaschine integrierten Filtersystems zusammenwirkt, in der mehrmalig verwendbaren Variante umgesetzt wird. In der EP 2682028 A1 des Anmelders wird diese Problematik beispielsweise durch das permanente Anbringen einer speziell hierfür von dem Anwender entwickelten Filterfolie direkt auf der Matrize der Portionskaffeemaschine gelöst.

Nach jedem Brühvorgang kann der Nutzer der wiederverwendbaren Kaffeekapseln sodann die leeren Kaffeekapseln wieder für den nächsten Brühvorgang neu befüllen. Ein gängiges Vorgehen der Nutzer besteht etwa derzeit darin, die Kaffeekapseln mittels eines etwa zur Befüllung von Brühkaffeefiltermaschinen herkömmlichen (Kaffeemaß-)Löffels zu befüllen und mittels eines vom Hersteller mitgelieferten Stopfers, einem sogenannten Tamper, oder aber auch mittels eines eigenständig hierzu umfunktionierten Löffels das eingefüllte Kaffeepulver zu verdichten. Sowohl Aroma als auch die während des Brühvorgangs erzeugte Schaumbildung hängen dabei unter anderem stark von dem Befüllungszustand (Füllvolumen und Verdichtungsgrad, aber auch Mahlgrad) des Kaffeemehls oder Tees in der jeweiligen Kaffeekapsel ab.

Insbesondere auch bei Kaffeeliebhabern, die den Anspruch haben, bei jedem Brühvorgang dasselbe hochqualitative Kaffeegenussergebnis zu erzielen, gestaltet sich daher das Füllprozedere der Kapseln mitunter etwas zeitaufwändig, und damit oftmals direkt konkurrierend mit dem der Kaffeezubereitung zugedachten Zeitaufwand. Nachteilig wird ferner auch oftmals ein sich unmittelbar an einen Brühvorgang anschließendes Wiederbefüllen einer noch nicht abgekühlten, gerade verwendeten Kaffeekapsel empfunden.

In der US 2011/0209623 ist eine Füll- und Kaffeemehlpresseinrichtung für einen Siebträger beschrieben, in welcher mit einer Verdichtungseinrichtung der Siebkorb zunächst mit Kaffeemehl befüllt und dieses schließlich gepresst werden kann. Der Siebkorb ist an dem Behältnis des Siebträgers angeordnet. An dem Siebträger ist ein Griffelement angeordnet. An dem oberen Rand des Behältnisses sind Kopplungselemente angeordnet, mittels denen die Verdichtungseinrichtung an dem Siebträger über korrespondierende Kopplungselemente an einer Schutzumfangswandung der Filtereinrichtung kraftschlüssig und insbesondere reibschlüssig und/oder formschlüssig angeordnet werden kann.

Der vorliegenden Erfindung liegt daher die Aufgabe zugrunde, den Nutzern ein leicht zu bedienendes, nutzerfreundliches Füllutensil für die wiederverwendbaren Kaffeekapseln oder entleerte Einwegkapseln an die Hand zu geben, mittels dem der Füllvorgang dieser mit Kaffeepulver nicht nur generell erleichtert und beschleunigt werden soll, sondern zudem möglichst unterstützend auf das Erzielen einer möglichst für den nachfolgenden Brühvorgang optimalen Befüllung der Kaffeekapsel wirken soll, um einen optimalen Kaffeegenuss zu erreichen.

Diese Aufgabe wird erfindungsgemäß durch die Gegenstände der unabhängigen Schutzansprüche erreicht. Vorteilhafte Ausführungsformen und Weiterbildungen sind Gegenstand der Unteransprüche.

Eine erfindungsgemäße Fülleinrichtung zum Befüllen von wiederverwendbaren bzw. nachfüllbaren Kaffeekapseln (oder, bevorzugt entleerten, Einwegkapseln) weist bevorzugt ein Griffelement zum Halten der Fülleinrichtung und mindestens ein erstes Führungselement auf, welches zur Anordnung und/oder zur Aufnahme wenigstens eines Abschnittes einer Kaffeekapsel geeignet und bestimmt ist. Bevorzugt ist dieses mindestens erste Führungselement zur Anordnung und/oder zur Aufnahme wenigstens eines Abschnittes des Randes einer Kaffeekapsel, bevorzugt des flanschartigen bzw. flanschförmigen Randes einer Kaffeekapsel und/oder des Bodens einer Kaffeekapsel geeignet und bestimmt.

Erfindungsgemäß weist die Fülleinrichtung mindestens eine Arretiereinrichtung auf, die dazu geeignet und bestimmt ist, eine an dem mindestens ersten Führungselement angeordnete und/oder aufgenommene Kaffeekapsel bezüglich einer Füllrichtung der Kaffeekapsel bzw. bezüglich der (einer) Längsrichtung dieser Kaffeekapsel zu fixieren. Üblicherweise deckt sich die Längsrichtung einer Kaffeekapsel mit der Füllrichtung der Kaffeekapsel (welche von der Kapselöffnung zum Kapselboden zeigt).

Es wird damit vorgeschlagen, eine Fülleinrichtung bereitzustellen, mittels derer zum einen eine Lagefixierung der zu befüllenden Kaffeekapsel vorgenommen werden kann und die ein Griffelement aufweist, mittels dem die Fülleinrichtung durch den Nutzer und damit mittelbar bzw. indirekt durch den Nutzer auch eine daran angeordnete Kaffeekapsel gehalten werden kann. Ein direkter Kontakt des Nutzers zu der Kaffeekapsel und/oder dem Füllgut ist bei der vorgeschlagenen erfindungsgemäßen Fülleinrichtung nur noch während des Einbringens bzw. der Anordnung der Kaffeekapsel in bzw. an die Fülleinrichtung, nicht mehr jedoch während dem eigentlichen Füllvorgang der Kaffeekapsel erforderlich.

Bevorzugt handelt es sich bei der Fülleinrichtung um eine handgeführte Fülleinrichtung. Insbesondere handelt es sich also um eine rein mechanisch wirkende Fülleinrichtung, die etwa ohne elektrische Antriebseinheiten bedient werden kann. Nichtsdestotrotz ist das Vorsehen elektrischer Antriebseinheiten etwa zur Unterstützung oder zur Erzielung eines exakten Verdichtungsgrades des Kaffeepulvers in der Kapsel möglich.

Vorteilhaft ist die Fülleinrichtung einteilig ausgestaltet. Denkbar ist aber auch, dass einzelne funktionelle Elemente der Fülleinrichtung, wie etwa eine Verdichtungseinrichtung oder ein Trichterelement, zwar fest aber dennoch lösbar an der Fülleinrichtung angeordnet ist.

In einer vorteilhaften Ausführungsform weist das mindestens erste Führungselement wenigstens eine Aufnahmeausnehmung auf, in die eine an der Fülleinrichtung anzuordnende bzw. aufzunehmende Kaffeekapsel aufgenommen werden kann bzw. angeordnet werden kann und/oder einrastbar ist.

In einer vorteilhaften Ausführungsform weist das mindestens erste Führungselement wenigstens eine, bevorzugt genau eine, Führungskurve bzw. Führungskontur auf, welche besonders bevorzugt eine wenigstens abschnittsweise kreisförmige und bevorzugt halbkreisförmige (Querschnitts-)Kontur aufweist.

Bevorzugt erstreckt sich das Griffelement (hauptsächlich, d.h. die Richtung der größten Ausdehnung des Griffelementes erstreckt sich) senkrecht zu der Füllrichtung der Kaffeekapsel bzw. senkrecht zur der Längsrichtung dieser Kaffeekapsel. Durch eine derartige Anordnung kann insbesondere der Füllvorgang und ebenfalls ein sich anschließender etwaiger Verdichtungsvorgang des zugeführten Kaffeepulvers, welcher vorteilhaft in Längsrichtung bzw. in Füllrichtung der Kaffeekapsel vorgenommen wird, weitgehend ungehindert von der Lage des Griffelementes ausgeführt werden. Bevorzugt ist dabei die Fülleinrichtung in Querform(-bauart) ausgestaltet.

In einer weiteren vorteilhaften Ausführungsform ist der Rand und/oder der Boden der Kaffeekapsel in die Aufnahmeausnehmung wenigstens abschnittsweise einrastbar. Bevorzugt ist die Fülleinrichtung besonders angepasst an Kaffeekapseln, die einen flanschartigen bzw. einen flanschförmigen oberen (umlaufenden) Rand aufweisen und der in die Aufnahmeausnehmung einrastbar ist.

Bevorzugt ist die Kaffeekapsel einzig bzw. ausschließlich über diesen Rand an der Fülleinrichtung anordenbar. Die übrigen Kapselabschnitte stehen daher vorteilhaft nicht in direktem Kontakt mit der Fülleinrichtung. Bevorzugt erstreckt sich das mindestens erste Führungselement und/oder die Aufnahmeausnehmung wenigstens abschnittsweise und bevorzugt vollständig in einer Ebene, die besonders bevorzugt senkrecht auf die Füllrichtung bzw. senkrecht auf die Längsachse der daran anzuordnenden Kaffeekapsel steht. Denkbar ist aber auch, dass die Kaffeekapsel an dessen Boden geführt werden und in der Fülleinrichtung einrasten kann.

In einer weiteren vorteilhaften Ausführungsform folgt das mindestens erste Führungselement wenigstens abschnittsweise einem im Wesentlichen kreisringförmigen Verlauf und/oder folgt die Aufnahmeausnehmung wenigstens abschnittsweise, bevorzugt vollständig, einem (im Wesentlichen) kreisringförmigen Verlauf. Als vorteilhaft hat es sich dabei für das Einbringen der Kaffeekapsel in das Führungselement gezeigt, dass das erste Führungselement bzw. die Aufnahmeausnehmung keinen vollständigen Kreisring ausbildet, sondern vielmehr lediglich ein Kreisringsegment, bevorzugt einen Halbkreis.

Bevorzugt bildet das erste Führungselement und insbesondere die Aufnahmeausnehmung (wenigstens abschnittsweise) eine (im Wesentlichen) halbkreisringförmige Auflagefläche für die Kaffeekapsel. Es hat sich gezeigt, dass eine im Wesentlichen halbkreisringförmige Auflagefläche, die demzufolge nur an einer Hälfte der Kaffeekapsel anliegt, diese ausreichend stabilisiert und gleichzeitig ein erleichtertes, schnelles Einbringen der Kaffeekapsel tangential zur Aufnahmeausnehmung ermöglicht. Besonders bevorzugt erstrecken sich die Endabschnitte der halbkreisringförmigen Aufnahmeausnehmung und/oder die Endabschnitte des halbkreisringförmigen ersten Führungselementes geradlinig (und tangential zum letzten Abschnitt) über den Halbkreisring hinaus, sind also bevorzugt jeweils über das Ende des Halbkreisringes hinaus geradlinig verlängert.

Bevorzugt ist der Durchmesser einer kreisringsegmentförmigen Aufnahmeausnehmung (Durchmesser des Außenkreises hiervon) ausgewählt aus dem Bereich zwischen 1 cm und 7 cm, bevorzugt zwischen 2.5 cm und 5 cm und besonders bevorzugt aus dem Bereich zwischen 3 cm und 4 cm.

In einer weiteren vorteilhaften Ausführungsform weist die Arretiereinrichtung wenigstens eine Klemmeinrichtung, bevorzugt wenigstens zwei Klemmeinrichtungen, auf. Denkbar sind aber auch drei oder mehr Klemmeinrichtungen. Bevorzugt sind die Klemmeinrichtungen auf dem ersten Führungselement angeordnet. Die Klemmwirkung einer solchen Klemmeinrichtung erstreckt sich dabei auf einen Bereich einer in der Aufnahmeausnehmung angeordneten Kaffeekapsel, der sich in einem vorgegebenen Bereich der Aufnahmeausnehmung (Klemmbereich) befindet, und dient der Lagefixierung der Kaffeekapsel auf der Aufnahmeausnehmung. Bevorzugt wirken die Klemmeinrichtungen auf den Kapselrand der angeordneten Kapsel. Bevorzugt basiert die klemmende Wirkung der Klemmeinrichtung auf wenigstens ein (jeweils) enthaltenes Federelement. Bevorzugt sind damit in der Fülleinrichtung Federstäbe zur tangentialen Führung (und auch Fixierung) der Kaffeekapsel entlang des ersten Führungselementes bzw. entlang der Aufnahmeausnehmung vorgesehen.

Bevorzugt liegen sich die Klemmbereiche, also diejenigen Bereiche der Aufnahmeausnehmung, auf die sich die klemmende Wirkung im Falle einer angeordneten Kaffeekapsel erstreckt, einander gegenüber, besonders bevorzugt (bezüglich des aufliegenden Kapselquerschnitts oder bezüglich des Kapselrandes bzw. bezüglich der halbkreissegmentförmigen Ausgestaltung der Aufnahmeausnehmung) diametral gegenüber.

Bevorzugt sind die (vorteilhaft beiden, besonders bevorzugt alle) Klemmeinrichtungen gegen die Füllrichtung (wenigstens abschnittsweise auch oberhalb des ersten Führungselementes) über ein Brückenelement miteinander verbunden.

In einer weiteren vorteilhaften Ausführungsform ist die Arretiereinrichtung geeignet und dazu bestimmt, eine kraftschlüssige und insbesondere eine reibschlüssige und/oder formschlüssige Verbindung zwischen der zu befüllenden Kapsel (insbesondere dem Kapselrand) und der Fülleinrichtung zu schaffen. Bevorzugt wird die kraftschlüssige Verbindung hauptsächlich durch ein Federelement der Fülleinrichtung verursacht bzw. durch Federkraft bewirkt.

In einer weiteren vorteilhaften Ausführungsform ist die Arretiereinrichtung derart ausgestaltet, dass die zu befüllende Kaffeekapsel quer einbringbar, insbesondere einschiebbar, ist. Unter quer wird dabei senkrecht zur Füllrichtung bzw. senkrecht zur Längsachse der Kaffeekapsel (d.h. eine Einbringbewegung innerhalb der Ebene, die die Aufnahmeausnehmung aufspannt) verstanden. Bevorzugt ist die zu befüllende Kaffeekapsel (form- und/oder kraftschlüssig bzw. reibschlüssig) quer einrastbar.

Bevorzugt ist die Kapsel und insbesondere wenigstens abschnittsweise ein Kapselrand in die Fülleinrichtung bzw. die Arretiereinrichtung (form- und/oder kraftschlüssig bzw. reibschlüssig) einrastbar. Bevorzugt weist die Arretiereinrichtung wenigstens ein Feder-(bolzen)-element und besonders bevorzugt zwei oder vorteilhaft mehr als zwei Feder-(bolzen)-elemente auf. Mittels diesem bzw. diesen kann die Kaffeekapsel an der Fülleinrichtung, etwa über ein federbelastetes Arretierelement oder mehrere federbelastete Arretierelemente, die vorteilhaft in einer Ausnehmung bzw. Bohrung der Fülleinrichtung angeordnet sind, fixiert bzw. angeordnet werden. Bevorzugt sind etwa die zwei Federelemente diametral bezüglich einander (gegenüber etwa der Aufnahmeausnehmung) angeordnet.

Alternativ oder zusätzlich weist die Arretiereinrichtung eine Führungskurve auf, in welche bzw. mittels welcher wenigstens ein Abschnitt der Kaffeekapsel (form- und/oder kraftschlüssig bzw. reibschlüssig) einschiebbar und/oder einrastbar ist. Bevorzugt ist die Arretiereinrichtung einstückig bzw. einteilig ausgestaltet und insbesondere die Arretiereinrichtung und das Griffelement aus einem einzigen Werksstück hergestellt und vorteilhaft einstückig und einteilig.

Bevorzugt wird die Klemmwirkung der Arretiereinrichtung (unter anderem auch) durch wenigstens eine und bevorzugt mehrere Ausnehmungen und/oder wenigstens ein (Bohr-)Loch und bevorzugt mehrere Bohrlöcher und/oder wenigstens einen und bevorzugt mehrere Schlitze, insbesondere länglicher Form, erzeugt.

Denkbar ist auch, dass die Arretiereinrichtung ein Schraubgewinde aufweist, mit dem die Kaffeekapsel (aufweisend ein hierzu korrespondierendes Gewinde) entsprechend zusammenwirken kann, und mittels dem die Kaffeekapsel an der Arretiereinrichtung befestigbar bzw. arretierbar ist.

Denkbar ist auch, dass die Kaffeekapsel mittels eines Bajonettverschlusses an der Fülleinrichtung fixierbar ist. Damit lässt sich vorteilhaft eine mechanische Verbindung der Kaffeekapsel und der Fülleinrichtung schnell herstellen und lösen.

Bevorzugt ist die Arretiereinrichtung derart ausgestaltet, dass die Klemmwirkung zwischen der Kaffeekapsel und der Arretiereinrichtung über wenigstens ein Dichtungselement und bevorzugt mehrere Dichtungselemente der Kaffeekapsel erzeugt wird bzw. erfolgt.

In einer weiteren vorteilhaften Ausführungsform weist die Fülleinrichtung wenigstens ein weiteres Führungselement auf und die Arretiereinrichtung sieht die Lagefixierung der zu befüllenden Kaffeekapsel zumindest abschnittsweise zwischen dem ersten Führungselement und dem wenigstens einen weiteren Führungselement vor, wobei bevorzugt das mindestens erste Führungselement relativ zu dem mindestens einen weiteren Führungselement federbelastet ist. Diese Federbelastung wird bevorzugt durch wenigstens eine und bevorzugt zwei Klemmeinrichtungen bewirkt.

Bevorzugt ist das wenigstens eine weitere Führungselement durch das Brückenelement gegeben. Bevorzugt erstreckt sich das wenigstens eine weitere Führungselement oberhalb (entgegen der Füllrichtung) der wenigstens einen Aufnahmeausnehmung) wenigstens abschnittsweise als Vorsprung (bevorzugt in radialer Richtung bezogen auf eine kreisringsegmentförmige Ausgestaltung der Aufnahmeausnehmung) über wenigstens einen Bereich der Aufnahmeausnehmung hinaus (den Klemmbereich). Besonders bevorzugt sind derartige Vorsprünge bei jedem Klemmbereich angeordnet.

Vorteilhaft ist in einem Zustand der Fülleinrichtung, in dem keine Kaffeekapsel angeordnet ist, der Abstand (bezogen auf eine Füllrichtung bzw. Längsachse einer angeordneten Kaffeekapsel) von dem weiteren Führungselement bzw. von dem Vorsprung zu dem zugehörigen Klemmbereich der Aufnahmeausnehmung kleiner, bevorzugt um mehr als ein Achtel, bevorzugt um mehr als ein Fünftel, bevorzugt um mehr als ein Viertel, bevorzugt um mehr als ein Drittel und besonders bevorzugt um mehr als die Hälfte kleiner als die Höhe (in Bezug auf die vorgenannte Achse) desjenigen Abschnittes der Kaffeekapsel, der an eben diese Stelle des Klemmbereiches anzuordnen ist. Während dem Anordnen der Kaffeekapsel an dem mindestens einen ersten Führungselement ist die Klemmkraft der angeordneten Klemmeinrichtung(en) in dem Maße zu überwinden bzw. ist derart überwindbar, dass die weiteren Führungselemente (nach oben) entgegen der Füllrichtung mindestens um die fehlende Höhendifferenz entgegen der jeweils wirkenden Klemmkräfte (zurück)gedrängt werden kann bzw. drängbar ist.

In einer weiteren vorteilhaften Ausführungsform weist die Fülleinrichtung eine Verdichtungseinrichtung auf, welche geeignet und dazu bestimmt ist, in der angeordneten bzw. aufgenommenen Kaffeekapsel befindliches Kaffeepulver, bevorzugt mittels eines entlang einer vorgegebenen Verdichtungsachse führbaren Verdichtungselementes, zu verdichten.

Als Verdichtungseinrichtung kann alternativ und/oder zusätzlich auch ein Trichterelement vorgesehen sein, mittels welchem durch kontinuierliche Verringerung des Zufuhrquerschnittes die Kaffeepulverdichte erhöht wird, die Befüllung einer Kaffeekapsel mit komprimierten Kaffeepulver erhalten werden kann.

Bevorzugt sind die Verdichtungseinrichtung und/oder das wenigstens erste Führungselement bzw. die wenigstens eine Aufnahmeausnehmung derart relativ zueinander angeordnet, dass die Längsachse einer an dem ersten Führungselement angeordneten und/oder aufgenommenen Kaffeekapsel (und/oder deren Füllrichtung) und die Verdichtungsachse der Verdichtungseinrichtung, entlang der das Verdichtungselement führbar ist, parallel zueinander verlaufen oder besonders bevorzugt (zumindest im Wesentlichen) miteinander zusammenfallen.

Bevorzugt weist das Verdichtungselement eine kreisförmige und/oder besonders bevorzugt eine ebene (glatte) Grundfläche bzw. Verdichtungsfläche (zur Verdichtung von pulverförmigem Material) auf. Vorteilhaft ist der Durchmesser dieser kreisförmigen Verdichtungsfläche aus einem Bereich zwischen 1 cm und 5 cm, bevorzugt zwischen 2 cm und 4.5 cm und besonders bevorzugt zwischen 2.5 cm und 3.5 cm ausgewählt.

Bevorzugt ist das Verdichtungselement an dem Brückenelement angeordnet bzw. befestigt.

In einer weiteren vorteilhaften Ausführungsform ist das Verdichtungselement derart federbelastet, dass es in einem Ausgangszustand (in der etwa durch den Benutzer noch keine Kraft auf die Verdichtungseinrichtung aufgebracht wird) in einer oberen Position oberhalb (gesehen entgegen der Verdichtungsrichtung bzw. entgegen der Füllrichtung einer angeordneten Kaffeekapsel) des ersten Führungselementes gehalten wird und bei Überwindung der Federrückstellkraft in eine verdichtende Position, insbesondere wenigstens auf die gleiche Höhe des ersten Führungselementes und besonders bevorzugt unterhalb des ersten Führungselementes, führbar ist.

Bevorzugt ist dabei in einem Zustand, in dem eine Kaffeekapsel an dem wenigstens ersten Führungselement angeordnet ist, das Verdichtungselement wenigstens abschnittsweise und bevorzugt vollständig entlang der Verdichtungsachse (in Verdichtungsrichtung bzw. in Füllrichtung) in die Kapsel einführbar. Hierdurch kann eine Kompression eines in der Kapsel befindlichen Pulvers erzielt werden.

In einer weiteren vorteilhaften Ausführungsform weist die Fülleinrichtung ein Trichterelement auf, mit welchem vorteilhaft ein gezieltes Befüllen der Kaffeekapsel ausschließlich durch die dafür vorgesehene Öffnung erleichtert werden kann. Bevorzugt begrenzt das Trichterelement zumindest abschnittsweise eine Öffnung, deren Querschnittsfläche sich in Verdichtungsrichtung bzw. in Füllrichtung der Kaffeekapsel (entlang der Verdichtungsachse) verringert. Bevorzugt deckt das Trichterelement den Rand einer angeordneten bzw. aufgenommenen Kaffeekapsel zumindest teilweise und bevorzugt vollständig ab.

Bevorzugt weist das Trichterelement insbesondere (im Wesentlichen) einen kreisringförmigen oder einen kreisringsegmentförmigen Querschnitt auf. Bevorzugt begrenzt das Trichterelement eine im Querschnitt kreisförmige Öffnung, dessen Durchmesser sich in Verdichtungsrichtung bzw. in Füllrichtung der Kaffeekapsel gesehen hin verjüngt bzw. verringert. Bevorzugt ist der minimale Öffnungsdurchmesser ausgewählt aus einem Bereich zwischen 1 cm und 5 cm, bevorzugt zwischen 1.5 cm und 4 cm und besonders bevorzugt zwischen 2 cm und 3 cm.

Bevorzugt ist das weitere Führungselement durch das Trichterelement gegeben. Besonders bevorzugt ist das Brückenelement ebenfalls durch das Trichterelement gegeben.

Beschrieben ist weiterhin eine Fülleinrichtung zum Befüllen von, insbesondere wiederverwendbaren, Kaffeekapseln (oder, bevorzugt entleerten, Einwegkapseln) mit einem Griffelement zum Halten der Fülleinrichtung und mit einer an dem Griffelement angeordneten Manteleinrichtung aufweisend eine Arretiereinrichtung zur Fixierung einer zu befüllenden Kaffeekapsel an der Fülleinrichtung. Unter einer Arretiereinrichtung kann bei dieser Variante auch ein Bereich verstanden werden, der an einen Bereich, bevorzugt an den Randbereich, einer zu befüllenden Kapsel anlegbar ist. Bevorzugt wird unter einer Arretiereinrichtung jedoch eine wie obig beschriebene Arretiereinrichtung verstanden, welche durch Herstellung einer kraftschlüssigen Verbindung (etwa durch Federkräfte bzw. Klemmkräfte) zwischen der Fülleinrichtung und der Kaffeekapsel für eine Lagefixierung letzterer sorgt.

Die Fülleinrichtung weist eine Verdichtungseinrichtung auf, welche geeignet und dazu bestimmt ist, in der angeordneten bzw. aufgenommenen Kaffeekapsel befindliches Kaffeepulver mittels eines entlang einer vorgegebenen Verdichtungsachse führbaren Verdichtungselementes zu verdichten.

Dabei kann diese Fülleinrichtung mit wenigstens einem oder auch mit einer Kombination mehrere im Zusammenhang mit der obig beschriebenen Variante einer Fülleinrichtung offenbarten Merkmale ausgestattet sein und umgekehrt sind alle nachfolgend beschriebenen Merkmale bzw. Kombinationen hieraus auch zur Ausstattung der obig beschriebenen Variante einer Fülleinrichtung denkbar.

Bevorzugt erstreckt sich das Griffelement in Füllrichtung (bzw. entlang der Längsachse) der zu befüllenden Kapsel. Bevorzugt ist die Fülleinrichtung damit in Langform ausgestaltet bzw. in Langformbauart. Bevorzugt weist das Griffelement einen geschwungenen (äußeren) Griffbereich auf.

Bevorzugt befindet sich wenigstens ein Teil der Verdichtungseinrichtung innerhalb des Griffelementes.

Bei einer vorteilhaften Ausführungsform erstreckt sich die Manteleinrichtung wenigstens abschnittsweise entlang der Verdichtungsachse und bildet einen sich entlang der Verdichtungsachse erstreckenden Hohlraum aus, wobei der Hohlraum in Bezug auf die Verdichtungsachse radialer Richtung durch die Manteleinrichtung wenigstens abschnittsweise begrenzt wird.

Bevorzugt weist die Manteleinrichtung (in ihrer Wandung) eine Zufuhröffnung zum Zuführen von Kaffeepulver in das Innere der Manteleinrichtung bzw. in den Hohlraum der Manteleinrichtung zum Befüllen einer an der Fülleinrichtung angeordneten Kaffeekapsel auf. Bevorzugt erstreckt sich diese Zufuhröffnung unter anderem entlang der Verdichtungsachse sowie auch entlang (wenigstens) einer Richtung, die in einer Ebene senkrecht zur Verdichtungsachse liegt. Bevorzugt weist diese Zufuhröffnung eine rechteckförmige (vorteilhaft mit abgerundeten Ecken) bzw. rechteckartige oder besonders bevorzugt eine ovale oder kreisförmige Form auf. Bevorzugt weist diese Zufuhröffnung einen Minimaldurchmesser von 1 cm, bevorzugt von 1.5 cm und besonders bevorzugt von 2 cm auf. Bevorzugt weist eine rechteckförmige (vorteilhaft mit abgerundeten Ecken) Zufuhröffnung im Wesentlichen eine Breite von mindestens 1 cm, bevorzugt mindestens 2 cm und besonders bevorzugt von mindestens 3 cm und im Wesentlichen eine Höhe von mindestens 1 cm, bevorzugt mindestens 1.5 cm und besonders bevorzugt mindestens 2 cm auf.

Bei einer weiteren vorteilhaften Ausführungsform weist der Hohlraum wenigstens abschnittsweise und bevorzugt vollständig (entlang der Verdichtungsachse) einen kreisförmigen Querschnitt (jeweils in einer Ebene senkrecht zur Verdichtungsachse gesehen) auf.

Bei einer weiteren vorteilhaften Ausführungsform ist das Verdichtungselement wenigstens abschnittsweise, bevorzugt jeweils in dem vollständigen Bereich entlang der Verdichtungsachse, innerhalb der Manteleinrichtung führbar.

Bei einer weiteren vorteilhaften Ausführungsform begrenzt die Manteleinrichtung an ihrem von dem Griffelement abgewandten Endabschnitt eine sich zur vorgegebenen Verdichtungsachse in senkrechter Richtung erstreckende, insbesondere kreisförmige, Öffnung. Bevorzugt ist der Durchmesser dieser Öffnung ausgewählt aus einem Bereich zwischen 1 cm und 7 cm, bevorzugt zwischen 1.5 cm und 5 cm und besonders bevorzugt zwischen 2 cm und 4 cm.

Bei einer weiteren vorteilhaften Ausführungsform ist das Verdichtungselement derart federbelastet, dass es in einem Ausgangszustand entlang der Verdichtungsachse in einer oberen Position innerhalb der Manteleinrichtung gehalten wird und bei Überwindung der Federrückstellkraft in eine verdichtende, untere Position entlang der Verdichtungsachse aus der Manteleinrichtung hinaus führbar bzw. auslenkbar ist.

Bevorzugt ist ein Federelement, welches die Federbelastung des Verdichtungselementes bewirkt, an dem von der Manteleinrichtung abgewandten Ende des Griffelementes angeordnet. Bevorzugt ist das Verdichtungselement mindestens 1 cm, bevorzugt mindestens 2 cm, bevorzugt mindestens 3 cm und besonders bevorzugt mindestens 3.5 cm aus seiner Ruhelage auslenkbar.

Bei einer weiteren vorteilhaften Ausführungsform weist die Fülleinrichtung einen Füllzylinder und einen innerhalb des Füllzylinders angeordneten Füllkolben auf. Der Füllzylinder weist ein proximales und ein distales Ende auf. Der Füllkolben weist ebenfalls ein proximales und ein distales Ende auf. Dabei beschreibt das distale Ende jeweils das Ende des Füllzylinders bzw. Füllkolbens, welches der Position, an der die Kaffeekapsel angeordnet bzw. fixiert ist, am nächsten liegt. Unter dem proximalen Ende wird entsprechend das entsprechend entgegengesetzte Ende verstanden.

Bevorzugt weist das proximale Ende des Füllkolbens (wenigstens) eine, insbesondere flanschartige und/oder kreisrunde, Fingerauflage auf. Bevorzugt weist das proximale Ende des Füllzylinders (wenigstens) eine, insbesondere flanschartige, Fingerauflage auf. Bevorzugt ist an dem proximalen Ende des Füllzylinders wenigstens eine (plattenartige und/oder flanschartige) Fingerauflage angeordnet und bevorzugt sind an diesem proximalen Ende zwei diametral (bezüglich der Längsachse/Füllrichtung) angeordnete (plattenartige) Fingerauflagen angeordnet.

Bevorzugt weist der Füllkolben eine Kolbenstange und an seinem distalen Ende einen Kolbenstopfen auf. Bevorzugt ist die Kolbenstange wenigstens abschnittsweise innerhalb des Füllzylinders angeordnet und geführt. Bevorzugt weist der Kolbenstopfen das Verdichtungselement auf bzw. ist das Verdichtungselement. Bevorzugt weist der Kolbenstopfen eine größere radiale Ausdehnung (in Bezug auf die Längsachse) auf als die Kolbenstange.

Bevorzugt weist der Füllzylinder an seinem distalen Ende einen distalen Abschnitt, in dem wenigstens zeitweise der Kolbenstopfen bzw. das Verdichtungselement angeordnet bzw. aufgenommen ist, auf, der eine größere radiale Ausdehnung (in Bezug auf die Längsachse) als ein mittlerer Abschnitt des Füllzylinders, in dem wenigstens ein Bereich der Kolbenstange geführt bzw. gelagert ist, aufweist. Bevorzugt weist der distale Abschnitt des Füllzylinders obig beschriebene Zufuhröffnung auf. Bevorzugt ist der äußere Übergangsbereich des distalen Abschnittes und des mittleren Abschnittes geschwungen ausgestaltet. Denkbar ist aber auch ein im Wesentlichen stufenförmiger Übergang.

Bevorzugt ist die an dem proximalen Ende des Füllkolbens angeordnete Fingerauflage, besonders bevorzugt mittels eines Gewindes, an der Kolbenstange lösbar angeordnet. Denkbar ist aber auch eine einstückige bzw. einteilige Ausführungsform, bei der die Fingerauflage kein separates Bauteil darstellt.

Bevorzugt ist der Kolbenstopfen bzw. das Verdichtungselement, besonders bevorzugt mittels eines Gewindes, an der Kolbenstange lösbar angeordnet. Hierdurch kann die Reinigung des Kolbenzylinderinnenraums erleichtert werden. Bevorzugt kann mittels des Gewindes eine Verlängerung bzw. Verkürzung der Kolbenstange bzw. der Entfernung zwischen der Fingerauflage und dem Kolbenstopfen erzielt werden. Hierdurch kann vorteilhaft die Verdichtungshöhe und damit der Verdichtungsgrad der Fülleinrichtung innerhalb der Kapsel verändert bzw. eingestellt werden. Des Weiteren kann vorteilhaft der Kolbenstopfen bzw. das Verdichtungselement durch ein anderes, etwa eines mit einem verschiedenen Durchmesser bzw. radialer Ausdehnung in Bezug auf die Längsachse, ausgetauscht werden. Auch dies kann für eine benutzerdefinierte Einstellung des Kompressionsgrades des Kaffeepulvers in der Kaffeekapsel bzw. der möglichen Eindringtiefe des Kolbenstopfens in die Kaffeekapsel relevant sein. Denkbar ist aber auch hier wieder eine einstückige bzw. einteilige Ausführungsform, bei der der Kolbenstopfen kein separates Bauteil darstellt.

Bevorzugt weist der Kolbenstopfen an seiner Verdichtungsseite (wenigstens abschnittsweise und bevorzugt vollständig) eine konkav und/oder konvex ausgebildete Oberflächenform auf.

Bevorzugt ist die Kolbenstange in dem Inneren des Füllzylinders zumindest abschnittsweise und bevorzugt zumindest in dem mittleren Abschnitt des Füllzylinders mittels eines Gewindes geführt und/oder gelagert.

Bevorzugt ist der Füllkolben relativ zum Füllzylinder nach oben abgefedert. Ohne (äußere) Krafteinwirkung befindet sich damit der Füllkolben relativ zum Füllzylinder in einer oberen Position. Bei Überwindung der Federkraft lässt sich der Füllkolben relativ zum Füllzylinder in einer Richtung vom proximalen zum distalen Ende, d.h. in Füllrichtung, bewegen. Eine derartige Abfederung wirkt sich vorteilhaft bei der Befüllung einer leeren an der Fülleinrichtung angeordneten Kaffeekapsel aus. Während deren Befüllung durch etwa die Zufuhröffnung mit Kaffeepulver stellt der Kolbenstopfen ob seiner oberen Position einen Schutz vor Eindringen des Kaffeepulvers in die Führung der Kolbenstange in dem Inneren des Füllzylinders dar. Bevorzugt befindet sich in dieser oberen Position das Verdichtungselement bzw. der Kolbenstopfen zumindest abschnittsweise und bevorzugt vollständig oberhalb der Zufuhröffnung bzw. in Richtung der Längsachse gesehen näher an dem proximalen Ende des Füllzylinders als die Zufuhröffnung. Bevorzugt umgreift in dieser oberen Position das Innere des Füllzylinders bzw. wenigstens ein Abschnitt der Innenwandung des Füllzylinders den Kolbenstopfen bzw. das Verdichtungselement (umfangsseitig bzw. wenigstens abschnittsweise umfangsseitig) (im Wesentlichen) passgenau, so dass in dieser Position vorteilhaft kein Kaffeepulver in den Führungskanal bzw. den Führungsbereich der Kolbenstange im Inneren des Füllzylinders (bzw. des mittleren Abschnitts des Füllzylinders) gelangen kann.

In einer vorteilhaften Ausführungsform dichtet der Füllkolben, in wenigstens einer Position, bevorzugt in einer oberen Position, des Füllkolbens relativ zu dem Füllzylinder, zu dem Führungsbereich des Füllzylinders (bzw. wenigstens eine Seite des Führungsbereiches) hin, in dem der Füllkolben in dem Füllzylinder geführt bzw. gelagert wird, ab. Hierdurch wird vorteilhaft vermieden oder zumindest erschwert, dass Kaffee in den Führungsbereich des Füllzylinders gelangt. Bevorzugt dichtet das (an den Füllkolben angeordnete) Verdichtungselement den Führungsbereich bzw. Führungskanal ab.

Bevorzugt ist der Füllkolben lösbar an dem Füllzylinder der Fülleinrichtung angeordnet. Wie bereits erwähnt kann dies mittels einem oder mehrerer Gewinde (etwa zur Anordnung der Fingerführung an der Kolbenstange und/oder zur Anordnung des Kolbenstopfens an der Kolbenstange und/oder zur Anordnung der Kolbenstange an dem Füllzylinder) realisiert sein. Eine solche lösbare Anordnung des Füllkolbens an dem Füllzylinder bietet den Vorteil, dass der Führungsbereich, an dem der Füllkolben in dem Füllzylinder geführt wird, gegebenenfalls leicht zu reinigen ist. Dieser Führungsbereich bzw. Führungskanal kann etwa sodann mit Wasser durchspült werden, falls dennoch Kaffeepulver in den Führungsbereich eingedrungen ist, was wohl trotz der Abdichtfunktion des Füllkolbens zu dem Führungsbereich hin nicht gänzlich vermeidbar ist.

Bevorzugt ist an dem distalen Ende des Füllzylinders eine sich senkrecht zur Füllrichtung erstreckende bevorzugt kreisrunde Öffnung und/oder die Arretiereinrichtung angeordnet. Bevorzugt ist der Rand dieser Öffnung derart ausgeführt, dass er im Wesentlichen passgenau das Verdichtungselement umgreifen kann und (zumindest zeitweise bei entsprechender Kolbenposition) umgreift.

Bevorzugt ist die Zufuhröffnung in Bezug auf die Längsachse des Füllzylinders diametral gegenüber einer Führungskurve der Arretiereinrichtung angeordnet.

Bei einer weiteren vorteilhaften Ausführungsform ist das Material der Fülleinrichtung zumindest abschnittsweise, bevorzugt vollständig, ausgewählt aus einer Gruppe, die (massives) Metall, Stahl, Edelstahl, V2A, Aluminium, magnetisches oder unmagnetisches Metall, Titanlegierungen, (harte) Kunststoffe, Polypropylen und Kombinationen hieraus enthält.

Bei einer weiteren vorteilhaften Ausführungsform weist die Fülleinrichtung ein Abstreifelement auf, welches dazu geeignet und bestimmt ist, während einer Entnahme einer an der Fülleinrichtung angeordneten bzw. aufgenommenen Kaffeekapsel wenigstens einen Teil des in dieser Kaffeekapsel befindlichen Kaffeepulvers, insbesondere denjenigen Teil, welcher einen vorbestimmten und/oder erwünschten Befüllungsgrad und/oder Füllhöhe der Kaffeekapsel überschreitet, zu entfernen.

Bevorzugt ragt dabei das Abstreifelement in einem Zustand der Fülleinrichtung, in dem eine Kaffeekapsel angeordnet ist, in wenigstens abschnittsweise in die Kaffeekapsel hinein. Bevorzugt ist das Abstreifelement an dem Trichterelement angeordnet und besonders bevorzugt an demjenigen Bereich des Trichterelementes, der demjenigen Bereich, in dem die Kapsel in die Filtereinrichtung eingeführt wird, am nächstgelegen ist.

Bevorzugt weist der Füllzylinder eine Öffnung auf und/oder eine Arretiereinrichtung, die (im Wesentlichen) diametral gegenüber der Zufuhröffnung angeordnet, so dass das in der Kaffeekapsel befindliche Füllgut direkt über die Zufuhröffnung entleert werden kann. Eine solche Ausführungsform bietet den Vorteil, dass ein in der Kaffeekapsel befindliches Füllgut nicht über eine Öffnung, die etwa bezogen auf die Kaffeekapselöffnung einer angeordneten Kaffeekapsel in einer hierzu im Wesentlichen senkrechten Ebene angeordnet ist, entleert werden muss. Stattdessen kann dieses über die Öffnung, die sich etwa in einer zur Zufuhröffnung (im Wesentlichen) parallelen Ebene erstreckt, entleert werden. Damit kann der Verschmutzungsgrad der Fülleinrichtung selbst verringert werden.

Bevorzugt ist der Kolbenstopfen bzw. das Verdichtungselement insbesondere über wenigstens ein Gelenk (bevorzugt zwei oder mehrere Gelenke), bevorzugt um 90 Grad, schwenkbar bzw. drehbar. Bevorzugt ist dabei vorgesehen, dass eine Verdichtung des in der Kaffeekapsel befindlichen Füllgutes entlang einer Richtung erfolgt, die senkrecht auf eine Richtung steht, entlang der der Füllkolben, insbesondere das proximale Ende des Füllkolbens, bewegbar ist bzw. innerhalb des Füllzylinders geführt wird.

Bevorzugt weist der Füllzylinder, insbesondere dessen Innenwandung, Führungskurven auf, die die Drehung bzw. Schwenkung des Kolbenstopfen bzw. des Verdichtungselementes um einen vorgegebenen Winkelbereich, bevorzugt um 90 Grad, führen.

Vorstellbar ist auch, dass die Füll- bzw. die Entleerungseinrichtung zwei Arretiereinrichtungen aufweist, wobei eine für den Füll- und Verdichtungsvorgang der Kapsel und die andere für den Entleerungsvorgang der Kapsel vorgesehen ist. Die beiden Arretiereinrichtungen bzw. zwei jeweils hierfür vorgesehene Öffnungen in dem Füllzylinder können dabei (im Wesentlichen) in zwei Ebenen angeordnet sein, die aufeinander senkrecht stehen. Dabei ist bevorzugt die für den Entleerungsvorgang vorgesehene Arretiereinrichtung bzw. Öffnung (diametral) gegenüber einer Zufuhröffnung, über die Kaffeepulver bzw. Füllgut in die Fülleinrichtung zugeführt werden kann, angeordnet und die für den Verdichtungsvorgang vorgesehene Arretiereinrichtung bzw. Öffnung bevorzugt senkrecht bezüglich dieser Zufuhröffnung angeordnet. Es kann in der Füll- bzw. Entleerungseinrichtung ein schwenkbares Abdeckelement vorgesehen sein, mittels welchem die für den Entleerungsvorgang vorgesehene Öffnung abdeckbar bzw. verschließbar ist, so dass während des Füllvorgangs der Kaffeekapsel kein Füllgut durch diese Öffnung hindurch die Fülleinrichtung bzw. den Füllzylinder verlassen kann.

Beschrieben ist weiterhin eine vorliegend nicht erfindungsgemäß beanspruchte Entleereinrichtung zum Entleeren von (mit Kaffeepulver insbesondere nach einem Aufbrühvorgang) gefüllten, insbesondere wiederverwendbaren bzw. nachfüllbaren, Kaffeekapseln (oder Einwegkapseln) gerichtet, wobei die Entleereinrichtung bevorzugt ein Griffelement zum Halten der Entleereinrichtung aufweist und mindestens ein erstes Führungselement aufweist, welches zur Anordnung und/oder zur Aufnahme wenigstens eines Abschnittes einer Kaffeekapsel geeignet und bestimmt ist. Bevorzugt ist dieses mindestens erste Führungselement zur Anordnung und/oder zur Aufnahme wenigstens eines Abschnittes des Randes einer Kaffeekapsel, bevorzugt des flanschartigen bzw. flanschförmigen Randes einer Kaffeekapsel geeignet und bestimmt.

Die Entleereinrichtung weist mindestens eine Arretiereinrichtung auf, die dazu geeignet und bestimmt ist, eine an dem mindestens ersten Führungselement angeordnete und/oder aufgenommene Kaffeekapsel bezüglich einer Entleerrichtung der Kaffeekapsel bzw. bezüglich der (einer) Längsrichtung dieser Kaffeekapsel zu fixieren. Üblicherweise deckt sich die Längsrichtung einer Kaffeekapsel mit der Entleerrichtung der Kaffeekapsel (welche von der Kapselöffnung zum Kapselboden zeigt).

Dabei kann die Entleereinrichtung mit allen obig bezüglich der Arretiereinrichtung und/oder dem Griffelement und/oder dem Material im Kontext der Fülleinrichtung beschriebenen Merkmalen ausgestattet sein.

Die Entleereinrichtung kann dabei in Rundbauweise insbesondere ohne Griffelemente, welche sich bevorzugt im Wesentlichen entlang der Entleerrichtung der Kaffeekapsel erstreckt, oder in Querbauweise insbesondere mit Griffelement, wobei sich das Griffelement vorteilhaft im Wesentlichen in eine Richtung senkrecht zur Entleerrichtung erstreckt, ausgestaltet sein.

Die vorliegende Erfindung ist weiterhin gerichtet auf eine Aufbewahrungseinrichtung für wenigstens eine Fülleinrichtung und/oder wenigstens eine Entleereinrichtung und/oder wenigstens eine und bevorzugt mehrere Kaffeekapseln. Bevorzugt weist die Aufbewahrungseinrichtung einen Aufbewahrungskörper auf, an dem bzw. in dem die Fülleinrichtung(en) und/oder die Entleereinrichtung(en) und/oder die Kapsel(n) (lösbar) anordenbar bzw. fixierbar sind. Bevorzugt können die obig genannten aufzubewahrenden Gegenstände jeweils in eine Ausnehmung des Aufbewahrungskörpers aufgenommen werden.

Bevorzugt weist der Aufbewahrungskörper (wenigstens abschnittsweise) einen kugelförmige Gestalt, bevorzugt eine halbkugelförmige Gestalt, auf, an dessen (wenigstens abschnittsweise) kugelförmiger Oberfläche die aufzubewahrenden Gegenstände (lösbar) angeordnet werden können bzw. an dem die jeweiligen hierfür vorgesehenen Ausnehmungen angeordnet sind. Bevorzugt ist die Fülleinrichtung an dessen distalem Endbereich in der Ausnehmung anordenbar. Denkbar ist aber auch, dass die Fülleinrichtung an oder in dem Bereich einer Fingerauflage der Fixiereinrichtung an der Aufbewahrungseinrichtung angeordnet werden kann. Bevorzugt erstrecken sich die mindestens eine Ausnehmung und besonders bevorzugt alle Ausnehmung entlang einer radialen Richtung, d.h. von einem Oberflächenbereich aus in Richtung des (Halb-)Kugelmittelpunktes.

Alternativ oder zusätzlich kann mindestens ein Magnet oder mehrere Magnete vorgesehen sein, mithilfe dem bzw. mithilfe derer die aufzubewahrenden Gegenstände an der Aufbewahrungseinrichtung angeordnet bzw. befestigt werden können.

Weitere Vorteile und Ausführungsformen ergeben sich aus den beigefügten Zeichnungen. Darin zeigen:
- Fig. 1: Eine Schrägansicht einer Ausführungsform einer erfindungsgemäßen Fülleinrichtung;
- Fig. 2: eine Vorderansicht einer Ausführungsform einer erfindungsgemäßen Fülleinrichtung;
- Fig. 3: eine Draufsicht einer weiteren Ausführungsform einer erfindungsgemäßen Fülleinrichtung;
- Fig. 4: eine Ansicht von unten der weiteren Ausführungsform einer erfindungsgemäßen Fülleinrichtung;
- Fig. 5: eine Seitenansicht der weiteren Ausführungsform einer erfindungsgemäßen Fülleinrichtung;
- Fig. 6: eine Seitenansicht einer Ausführungsform einer weiteren erfindungsgemäßen Fülleinrichtung;
- Fig. 7: eine Seitenansicht eines Abschnittes der Ausführungsform der weiteren erfindungsgemäßen Fülleinrichtung;
- Fig. 8: eine Seitenansicht eines Abschnittes der Ausführungsform der weiteren erfindungsgemäßen Fülleinrichtung zusammen mit einer Kaffeekapsel;
- Fig. 9: eine schematische Seitenansicht einer weiteren Ausführungsform einer erfindungsgemäßen Fülleinrichtung;
- Fig. 10: eine schematische Seitenansicht einer weiteren Ausführungsform einer erfindungsgemäßen Fülleinrichtung zusammen mit einer daran angeordneten Kaffeekapsel;
- Fig.11: eine schematische Seitenansicht einer Ausführungsform einer erfindungsgemäßen Füll- und Entleereinrichtung zusammen mit einer daran angeordneten Kaffeekapsel.

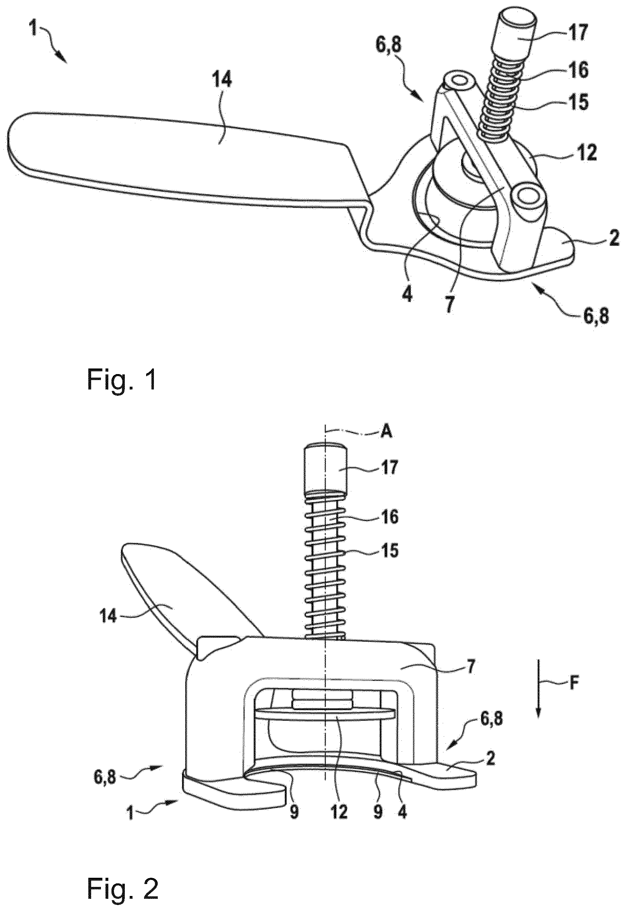

Fig. 1 und Fig. 2 zeigen in einer Schrägansicht und in einer Vorderansicht eine Ausführungsform einer erfindungsgemäßen Fülleinrichtung 1. Das Bezugszeichen 2 bezeichnet dabei das erste Führungselement, auf dem eine zu befüllende Kaffeekapsel 10 in die Fülleinrichtung 1 eingebracht wird. Wie dargestellt, kann das erste Führungselement 2 eine Aufnahmeausnehmung 4 bzw. eine Nut aufweisen, welche wenigstens abschnittsweise halbkreisförmig ausgestaltet sein kann. Bevorzugt kann der (flanschartige) Rand der zu befüllenden Kaffeekapsel 10 in dieser Nut bzw. Aufnahmeausnehmung 4 wenigstens abschnittsweise angeordnet bzw. aufgenommen werden.

Die Fülleinrichtung 1 weist darüber hinaus über eine Arretiereinrichtung 6 auf, mittels derer die Position einer Kaffeekapsel 10 relativ zur Fülleinrichtung 1 bzw. zur Aufnahmeausnehmung 4 fixierbar ist. Hierfür ist mindestens eine Klemmeinrichtung 8 vorgesehen, welche etwa einen Abschnitt des in der Aufnahmeausnehmung 4 befindlichen bzw. aufgenommenen Rand einer Kapsel 10 gegen die Aufnahmeausnehmung 4 bzw. gegen das erste Führungselement 2 zu pressen bzw. drücken oder klemmen vermag. In den Figuren 1 und 2 sind dabei zwei, bezüglich der halbkreisförmigen Ausgestaltung der Aufnahmeausnehmung 4 und auch des ersten Führungselementes diametral zueinander angeordneten Klemmeinrichtungen 8 gezeigt. Die beiden Klemmeinrichtungen 8 sind dabei über ein gemeinsames Brückenelement 7 miteinander (und auch jeweils mit dem ersten Führungselement) verbunden. Das Brückenelement 7 dient in der in den Figuren 1 und 2 gezeigten Ausführungsform jeweils als weiteres Führungselement. Dabei erstrecken sich die beiden weiteren Führungselemente radial nach innen und insbesondere über die Aufnahmeausnehmung 4 hinaus. Das Bezugszeichen 9 kennzeichnet einen Klemmbereich, d.h. den Bereich der Aufnahmeausnehmung 4 bzw. des ersten Führungselementes 2 an dem sich jeweils die Wirkung einer Klemmeinrichtung 8 (unmittelbar) entfaltet.

In der dargestellten Fülleinrichtung 1 ist des Weiteren zudem eine Verdichtungseinrichtung 16 vorgesehen. Diese ist hier auf dem Brückenelement 7 angeordnet. Die Verdichtungseinrichtung 16 weist ein Verdichtungselement 12 mit hier kreisförmiger Verdichtungsfläche auf. Das Verdichtungselement 12 ist dabei derart durch die von einer Feder 15 wirkenden Federkraft federbelastet, dass es in einer oberen Position gehalten wird. Durch Betätigen des Betätigungselementes 17, genauer durch Überwinden der Federkraft der Feder 15, ist das Verdichtungselement 12 entlang einer Verdichtungsachse A führbar. Das Verdichtungselement 12 kann durch Kraftbeaufschlagung des Betätigungselementes 17 von seiner oberen Position in Füllrichtung F bzw. in Verdichtungsrichtung F (welche parallel zur und gleichgerichtet wie die Füllrichtung der Kaffeekapsel ist und (bevorzugt) parallel zu der Längsachse L der zu befüllenden Kaffeekapsel) in eine (untere) Position gebracht werden, die sich bereits innerhalb einer an der Fülleinrichtung 1 angeordneten Kaffeekapsel 10 befindet und dadurch darin befindliches Kaffeepulver komprimiert wird.

Gezeigt ist auch ein Griffelement 14 zum Halten der Fülleinrichtung 1 durch den Nutzer. Eine zu befüllende Kaffeekapsel 10 kann quer, d.h. senkrecht zu der Längsachse der einzubringenden Kaffeekapsel bzw. senkrecht zu der Füllrichtung F bzw. senkrecht zu der Verdichtungsrichtung F eingebracht werden. In der hier dargestellten Ausführungsform erstreckt sich das Griffelement 14 im Wesentlichen senkrecht zur Füllrichtung F bzw. zur Verdichtungsachse A, wodurch vorteilhaft der Verdichtungseinrichtung 16 ausreichend Platz eingeräumt wird.

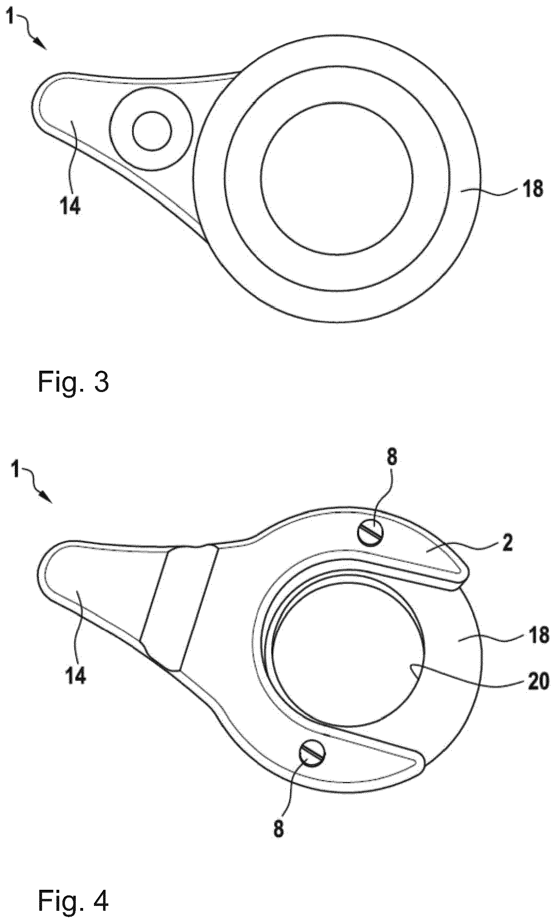

Die Figuren 3 - 5 zeigen eine Draufsicht, eine Ansicht von unten sowie eine Seitenansicht einer weiteren Ausführungsform einer erfindungsgemäßen Fülleinrichtung 1. Im Unterschied zu der in den vorherigen Figuren gezeigten Ausführungsform ist das weitere Führungselement als kreisringförmiges Trichterelement 18 ausgebildet, welcher an dessen Unterseite ein Abstreifelement 20 aufweisen kann. Das Trichterelement 18 bildet zudem zugleich das Brückenelement 7 aus, welches die beiden diametral zueinander angeordneten Klemmeinrichtungen 8 miteinander verbindet.

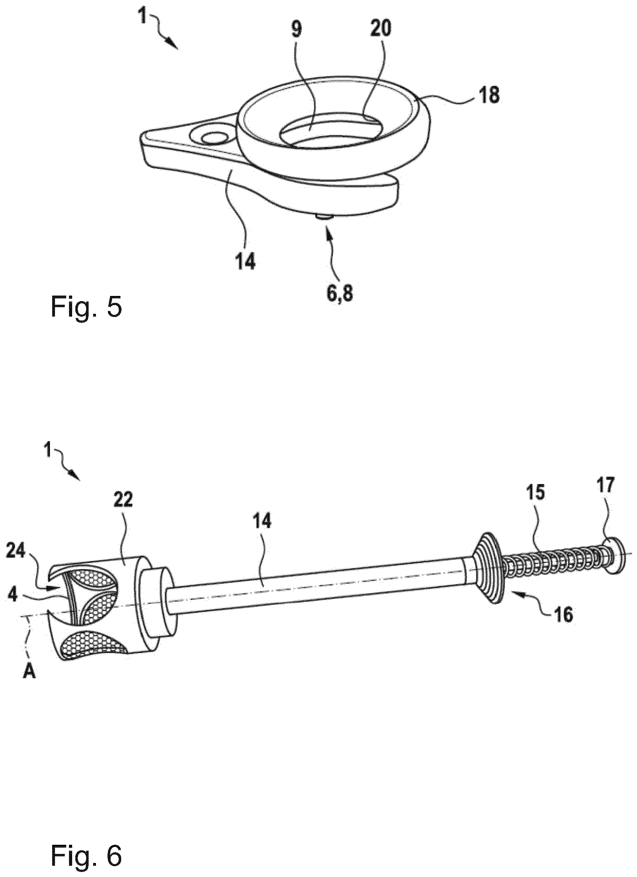

Fig. 6 zeigt eine Seitenansicht einer Ausführungsform einer weiteren erfindungsgemäßen Fülleinrichtung 1. Diese weist eine Verdichtungseinrichtung 16 mit einem Verdichtungselement 12 vor, welches ebenfalls eine kreisförmige Verdichtungsfläche aufweist. Wiederum ist das Verdichtungselement 12 entlang einer vorgegebenen Verdichtungsachse 1 führbar. Ein solches Führen kann durch den Benutzer durch Betätigen bzw. Drücken des Betätigungselementes erzielt werden. In einem Ausgangszustand der Fülleinrichtung 1 befindet sich das Verdichtungselement 12 in einer oberen Position (d.h. in einem dem Betätigungselement 17 zugewandten Endbereich der Manteleinrichtung 22) innerhalb der Manteleinrichtung 22.

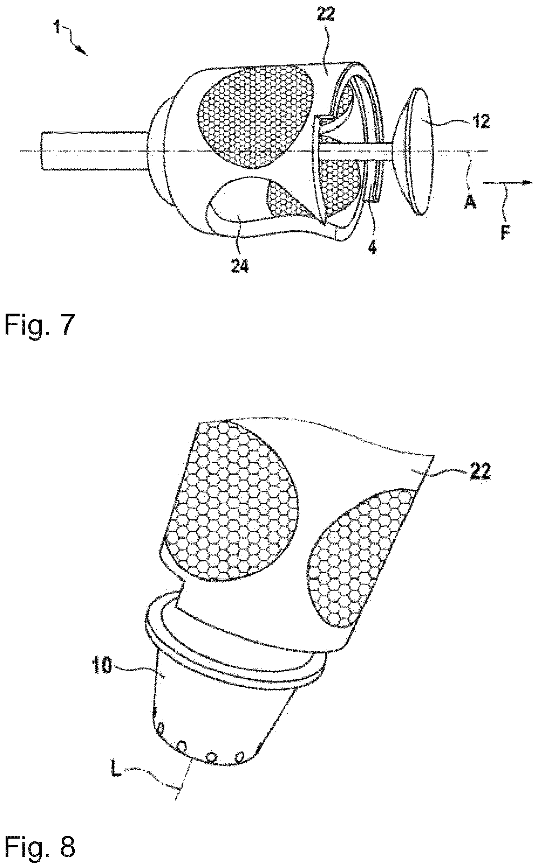

Bei Betätigung des Betätigungselementes 17 durch den Benutzer und Überwindung der Federrückstellkraft der Feder 15 ist das Verdichtungselement 12 entlang der Verdichtungsachse A in Füllrichtung F bzw. in Verdichtungsrichtung F auch aus der Manteleinrichtung 22 heraus führbar. Diese Situation ist in Fig. 7 dargestellt, welche den hierfür relevanten Abschnitt der Fülleinrichtung 1, nämlich die Position des Verdichtungselementes 12 in Relation zu der Manteleinrichtung 22, in einer Seitenansicht zeigt.

Den beiden Figuren 6 und 7 kann darüber hinaus entnommen werden, dass die Manteleinrichtung 22 einen sich entlang der Verdichtungsachse A erstreckenden Hohlraum 26 (zumindest abschnittsweise, mit Ausnahme der Kaffeepulverzufuhröffnung 24) begrenzt, welcher zumindest abschnittsweise einen kreisförmigen Querschnitt in einer Schnittebene senkrecht zu der Verdichtungsachse A aufweist. Die Manteleinrichtung 22 weist darüber hinaus in ihrer Wandung (wenigstens) eine Öffnung 24 auf, durch die hindurch Kaffeepulver zur Befüllung einer an der Fülleinrichtung 1 angeordneten, zu befüllende Kapsel 10 zugeführt werden kann. Darüber hinaus kann in der Manteleinrichtung 22 eine Nut bzw. eine Aufnahmeausnehmung 4 vorgesehen sein, in welche der Rand einer Kaffeekapsel einbringbar ist bzw. aufgenommen werden kann.

Im Unterschied zu der in den ersten fünf Figuren gezeigten Variante einer Fülleinrichtung 1 erstreckt sich bei der in den Figuren 6 - 8 dargestellten Fülleinrichtung 1 das Griffelement 14 entlang der Verdichtungsachse A. Bevorzugt befindet sich wenigstens ein Teil der Verdichtungseinrichtung 16 innerhalb des Griffelementes 14.

Fig. 8 zeigt eine Seitenansicht eines Abschnittes der Ausführungsform der weiteren erfindungsgemäßen Fülleinrichtung 1 zusammen mit einer zu befüllenden Kaffeekapsel 10. In dieser Darstellung ist explizit die Längsrichtung L der zu befüllenden bzw. der zu anzuordnenden Kaffeekapsel dargestellt.

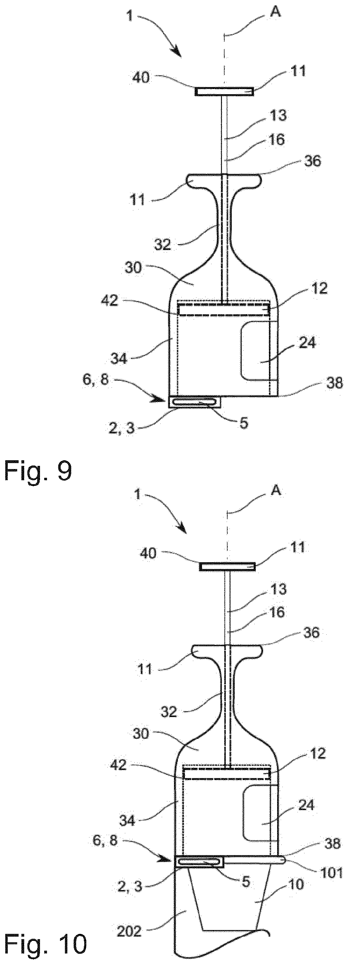

Fig. 9 zeigt eine schematische Seitenansicht einer weiteren Ausführungsform einer erfindungsgemäßen Fülleinrichtung 1. Diese weist eine als Klemmeinrichtung 8 ausgebildete Arretiereinrichtung 6 zur Aufnahme bzw. zur Arretierung einer zu befüllenden Kaffeekapsel 10 (nicht gezeigt) auf. Die Klemmwirkung wird dabei durch eine Führungskurve 3 (erstes Führungselement 2) als auch durch Langlöcher 5 erzielt. Dabei kann die Führungskurve etwa gewellt verlaufen und insbesondere eine Wellung im Bereich eines Langloches 5 aufweisen.

Die Arretiereinrichtung 6 ist an dem distalen Ende 38 des Füllzylinders 30 der Fülleinrichtung 1 angeordnet. Der Füllzylinder 30 weist an dessen proximalen Ende 36 eine Fingerauflage 11 auf. Der Füllzylinder 30 erfüllt bevorzugt zugleich die Funktion eines Griffelementes 14 der Fülleinrichtung 1. Zudem dient er bevorzugt der Lagerung bzw. der Führung eines Füllkolbens 16. Der Füllkolben 16 weist bevorzugt an dessen proximalen Ende 40 ebenfalls eine Fingerführung 11 und an dessen distalem Ende 42 ein Verdichtungselement 12 bzw. einen Kolbenstopfen 12 auf. Kolbenstopfen 12 und die Fingerführung 11 des Füllkolbens 16 sind über eine Kolbenstange 13 miteinander verbunden. Der Füllkolben 16 ist bevorzugt innerhalb des Füllzylinders 30, besonders bevorzugt innerhalb eines mittleren Bereichs 32 des Füllzylinders geführt und gelagert.

In der abgebildeten schematischen Zeichnung stellt die gepunktete Linie eine Innenkontur des Füllzylinders 30 in einem distalen Bereich 34 dar. Dieser distale Bereich 34 ist insbesondere dazu geeignet, das Verdichtungselement bzw. den Kolbenstopfen 12 (insbesondere zeitweise in der oberen Position) zumindest abschnittsweise und bevorzugt vollständig aufzunehmen. Die gestrichelte Linie deutet den Verlauf der Kolbenstange 13 im Inneren des Füllzylinders 30 (innerhalb eines Führungskanales des Füllzylinders 30) an. Darüber hinaus weist der Füllzylinder 30 bevorzugt eine Zufuhröffnung 24, hier in rechteckiger Form mit abgerundeten Ecken, auf, durch welche hindurch eine zu befüllende, an der Arretiereinrichtung 6 der Fülleinrichtung 1 angeordnete Kaffeekapsel 10 mit Kaffeepulver befüllt werden kann.

Während dieses Füllvorgangs ist es vorteilhaft, dass sich das Verdichtungselement bzw. der Kolbenstopfen 12 entgegen der Füllrichtung gesehen bzw. von dem distalen Ende 38 in Richtung des proximalen Endes 36 des Füllzylinders 30 gesehen (in Bezug auf die Achse A) oberhalb der Zufuhröffnung 24 befindet. Bevorzugt wird dies automatisch mit einer Federbeaufschlagung des Füllkolbens 16 relativ zu dem Füllzylinder 30 erzielt. Ebenso hat es sich als vorteilhaft erwiesen, dass in dieser oberen Position des Füllkolbens 16 dieser umfangsseitig (in Bezug auf die Achse A) im Wesentlichen vollständig und im Wesentlichen passgenau von der Innenwandung des Füllzylinders 30 umgeben wird, um zu verhindern, dass Kaffeepulver in den Führungskanal bzw. zur Lagerung der Kolbenstange 13 im Inneren des Füllzylinders 30 (in dessen mittleren Bereich 32) gelangt und diese verunreinigt.

Figur 10 zeigt eine schematische Seitenansicht einer weiteren Ausführungsform einer erfindungsgemäßen Fülleinrichtung 1 zusammen mit einer daran angeordneten Kaffeekapsel 10. Im Vergleich zu der in Fig. 9 gezeigten Ausführungsform weist die hier dargestellte Fülleinrichtung 1 eine Arretiereinrichtung 6 bzw. eine Klemmeinrichtung 8 auf, die nicht nur ein erstes Führungselement 2 bzw. eine Führungskurve 3 zur Aufnahme bzw. zum Einrasten eines Randes 101 einer Kaffeekapsel 10 geeignet und bestimmt ist, sondern bevorzugt zusätzlich ein Bodenführungselement 202, das zur Aufnahme bzw. zur Führung und/oder zum Einrasten (wenigstens eines Abschnittes) des Bodens der Kaffeekapsel 10 geeignet und bestimmt ist. Ein derartiges Bodenführungselement 202 kann entweder zusätzlich oder alternativ zu einem Führungselement zur Führung des Randes 101 der Kaffeekapsel 10 vorgesehen sein.

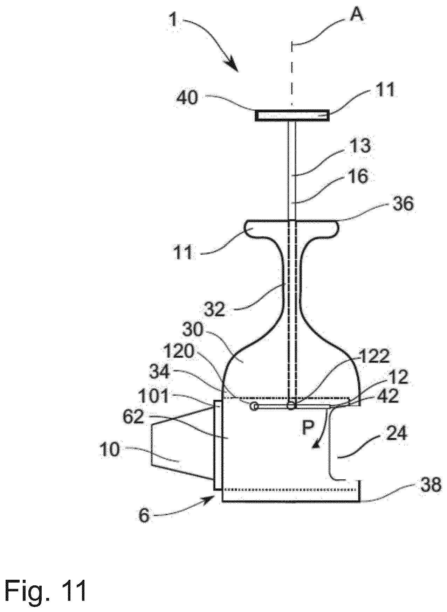

Figur 11 zeigt eine schematische Seitenansicht einer Ausführungsform einer erfindungsgemäßen Füll- und Entleerungseinrichtung 1 zusammen mit einer daran angeordneten Kaffeekapsel 10. Anders als in den zuvor dargestellten Ausführungsformen befindet sich die Arretiereinrichtung 6 der Fülleinrichtung 1 bzw. eine Öffnung 62 in dem Füllzylinder 30 nicht am Bodenteil bzw. direkt an dem distalen Ende 38 des Füllzylinders 30, sondern (diametral) gegenüber der Zufuhröffnung 24 des Füllzylinders 30 (in Bezug auf die Achse A).

In dieser Ausführungsform wird daher in der Kaffeekapsel befindliches Füllgut in einer Richtung verdichtet, die senkrecht auf die Richtung steht, entlang der das proximale Ende 40 des Füllkolbens 16 bzw. die Kolbenstange 13 führbar ist. Das Verdichtungselement 12 bzw. der Koblenstopfen 12 kann um ein Gelenk 120 geschwenkt bzw. gedreht werden, in Fig. 11 illustriert durch den Pfeil P, so dass es in einem Verdichtungsmodus parallel zur Kapselöffnung in diese Kapsel wenigstens teilweise eingeführt werden kann. Kolbenstange 13 und Kolbenstopfen 12 können dabei über ein Gelenk 122 miteinander verbunden sein. Bevorzugt sind allerdings mehrere Gelenke bzw. Gelenkelemente vorgesehen.

Der Anmelder behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste:

- 1: Fülleinrichtung/ Entleereinrichtung
- 2: erstes Führungselement
- 3: Führungskurve
- 4: Aufnahmeausnehmung / Nut
- 5: Langloch
- 6: Arretiereinrichtung
- 7: Brückenelement
- 8: Klemmeinrichtung
- 9: Klemmbereich
- 10: Kapsel/Kaffeekapsel
- 11: Fingerauflage
- 12: Verdichtungselement/ Kolbenstopfen
- 13: Kolbenstange
- 14: Griffelement
- 15: Feder
- 16: Verdichtungseinrichtung/ Füllkolben
- 17: Betätigungselement
- 18: Trichterelement
- 20: Abstreifelement
- 22: Manteleinrichtung
- 24: Öffnung/ Zufuhröffnung
- 26: Hohlraum
- 30: Füllzylinder
- 32: mittlerer Bereich
- 34: distaler Bereich
- 36: proximales Ende
- 38: distales Ende
- 40: proximales Ende
- 42: distales Ende
- 62: Öffnung
- 101: Rand der Kaffeekapsel
- 202: Bodenführungselement
- A: Verdichtungsachse
- F: Füllrichtung/ Verdichtungsrichtung
- L: Längsachse
- P: Pfeil

## Patentansprüche

1. Fülleinrichtung (1) zum Befüllen von
wiederverwendbaren Kaffeekapseln (10) bevorzugt mit einem Griffelement (14) zum Halten der Fülleinrichtung (1) und mit mindestens einem ersten Führungselement (2), welches zur Anordnung und/oder zur Aufnahme wenigstens eines Abschnittes einer Kaffeekapsel (10) geeignet und bestimmt ist, wobei die Fülleinrichtung (1) mindestens eine Arretiereinrichtung (6) aufweist, die dazu geeignet und bestimmt ist, eine an dem mindestens ersten Führungselement (2) angeordnete und/oder aufgenommene Kaffeekapsel (10) bezüglich einer Füllrichtung (F) der Kaffeekapsel bzw. bezüglich der Längsrichtung (L) dieser Kaffeekapsel (10) zu fixieren,
**dadurch gekennzeichnet, dass**
die Arretiereinrichtung geeignet und dazu bestimmt ist, eine kraftschlüssige und insbesondere eine reibschlüssige und/oder formschlüssige Verbindung zwischen der zu befüllenden Kapsel (10) und der Fülleinrichtung zu schaffen.

2. Fülleinrichtung (1) gemäß Anspruch 1,
**dadurch gekennzeichnet, dass**
das mindestens erste Führungselement (2) wenigstens eine Aufnahmeausnehmung (4) aufweist, in die eine an der Fülleinrichtung (1) anzuordnende bzw. aufzunehmende Kaffeekapsel (10) einrastbar ist und/oder der Rand und/oder der Boden der Kaffeekapsel (10) in die Aufnahmeausnehmung (4) wenigstens abschnittsweise einrastbar ist.

3. Fülleinrichtung (1) gemäß wenigstens einem der vorangegangenen Ansprüche,
**dadurch gekennzeichnet, dass**
das mindestens erste Führungselement (2) wenigstens abschnittsweise einem im Wesentlichen kreisringförmigen Verlauf folgt und/oder die Aufnahmeausnehmung (4) wenigstens abschnittsweise, bevorzugt vollständig, einem kreisringförmigen Verlauf folgt.

4. Fülleinrichtung (1) gemäß wenigstens einem der vorangegangenen Ansprüche,
**dadurch gekennzeichnet, dass**
die Arretiereinrichtung (6) wenigstens eine Klemmeinrichtung (8), bevorzugt wenigstens zwei Klemmeinrichtungen (8), aufweist und/oder die Arretiereinrichtung (6) geeignet und dazu bestimmt ist, eine kraftschlüssige Verbindung zwischen der zu befüllenden Kapsel und der Fülleinrichtung (1) zu schaffen.

5. Fülleinrichtung (1) gemäß wenigstens einem der vorangegangenen Ansprüche,
**dadurch gekennzeichnet, dass**
die Arretiereinrichtung (6) derart ausgestaltet ist, dass die zu befüllende Kaffeekapsel (10) quer einbringbar, insbesondere einschiebbar, ist.

6. Fülleinrichtung (1) gemäß wenigstens einem der vorhergehenden Ansprüche,
**dadurch gekennzeichnet, dass**
sie wenigstens ein weiteres Führungselement aufweist und die Arretiereinrichtung (6) die Lagefixierung der zu befüllenden Kaffeekapsel zumindest abschnittsweise zwischen dem ersten Führungselement (2) und dem wenigstens einen weiteren Führungselement vorsieht, wobei bevorzugt das mindestens erste Führungselement (2) relativ zu dem mindestens einen weiteren Führungselement federbelastet ist.

7. Fülleinrichtung (1) gemäß wenigstens einem der vorhergehenden Ansprüche,
**dadurch gekennzeichnet, dass**
sie eine Verdichtungseinrichtung (16) aufweist, welche geeignet und dazu bestimmt ist, in der angeordneten bzw. aufgenommenen Kaffeekapsel befindliches Kaffeepulver bevorzugt mittels eines entlang einer vorgegebenen Verdichtungsachse führbaren Verdichtungselementes (12) zu verdichten.

8. Fülleinrichtung (1) gemäß dem vorhergehenden Anspruch,
**dadurch gekennzeichnet, dass**
das Verdichtungselement (12) derart federbelastet ist, dass es in einem Ausgangszustand in einer oberen Position oberhalb des ersten Führungselementes (2) gehalten wird und bei Überwindung der Federrückstellkraft in eine verdichtende Position, insbesondere wenigstens auf die gleiche Höhe des ersten Führungselementes (2) und besonders bevorzugt unterhalb des ersten Führungselementes (2), führbar ist.

9. Fülleinrichtung (1) gemäß wenigstens einem der vorhergehenden Ansprüche,
**dadurch gekennzeichnet, dass**
sie ein Trichterelement (18) aufweist.

## Claims

1. Filling device (1) for filling reusable coffee capsules (10), preferably with a gripping element (14) for holding the filling device (1) and with at least one first guide element (2) which is suitable and intended to arrange and/or to accommodate at least a section of a coffee capsule (10), wherein the filling device (1) has at least one locking device (6) which is suitable and intended for fixing a coffee capsule (10) arranged and/or accommodated on the at least first guide element (2) with respect to a direction (F) of the coffee capsule or with respect to the longitudinal direction (L) of this coffee capsule (10),
**characterised in that**
the locking device is suitable and intended to create a force-fitting and in particular frictionally and/or positively engaged connection between the capsule (10) to be filled and the filling device.

2. Filling device (1) according to claim 1,
**characterised in that**
the at least first guide element (2) has at least one accommodating recess (4), into which a coffee capsule (10) to be arranged or accommodated on the filling device (1) can be latched and/or the edge and/or the base of the coffee capsule (10) can be latched into the accommodating recess (4) at least in some sections.

3. Filling device (1) according to at least one of the preceding claims,
**characterised in that**
the at least first guide element (2) follows a substantially circular ring-shaped course at least in some sections and/or the accommodating recess (4) follows a circular ring-shaped course at least in some sections, preferably completely.

4. Filling device (1) according to at least one of the preceding claims,
**characterised in that**
the locking device (6) has at least one clamping device (8), preferably at least two clamping devices (8), and/or the locking device (6) is suitable and intended to create a force-fitting connection between the capsule to be filled and the filling device (1).

5. Filling device (1) according to at least one of the preceding claims,
**characterised in that**
the locking device (6) is designed in such a way that the coffee capsule (10) to be filled can be introduced, in particular pushed in, transversely.

6. Filling device (1) according to at least one of the preceding claims,
**characterised in that**
it has at least one further guide element and the locking device (6) provides the positional fixing of the coffee capsule to be filled, at least in sections, between the first guide element (2) and the at least one further guide element, wherein preferably the at least first guide element (2) is spring-loaded relative to the at least one further guide element.

7. Filling device (1) according to at least one of the preceding claims,
**characterised in that**
it has a compression device (16) which is suitable and intended to compress coffee powder located in the arranged or accommodated coffee capsule, preferably by means of a compression element (12) which can be guided along a predetermined compression axis.

8. Filling device (1) according to the preceding claim,
**characterised in that**
the compression element (12) is spring-loaded in such a way that in an initial state it is held in an upper position above the first guide element (2) and, when the spring restoring force is overcome, can be guided into a compressing position, in particular at least to the same height of the first guide element (2) and particularly preferably below the first guide element (2).

9. Filling device (1) according to at least one of the preceding claims,
**characterised in that**
it has a funnel element (18).

## Revendications

1. Dispositif de remplissage (1) destiné à remplir
des capsules de café (10) réutilisables de préférence avec un élément de poignée (14) pour maintenir le dispositif de remplissage (1) et avec au moins un premier élément de guidage (2), lequel est adapté et déterminé pour l'agencement et/ou la réception d'au moins une partie d'une capsule de café (10), dans lequel le dispositif de remplissage (1) présente au moins un dispositif d'arrêt (6) qui est adapté et déterminé pour fixer une capsule de café (10) agencée et/ou reçue contre le au moins premier élément de guidage (2) par rapport à une direction de remplissage (F) de la capsule de café ou par rapport à la direction longitudinale (L) de cette capsule de café (10),
**caractérisé en ce que**
le dispositif d'arrêt est adapté et déterminé pour créer une liaison par la force et en particulier par la friction et/ou par la forme entre la capsule (10) à remplir et le dispositif de remplissage.

2. Dispositif de remplissage (1) selon la revendication 1,
**caractérisé en ce que**
le au moins premier élément de guidage (2) présente au moins un évidement de réception (4) dans lequel une capsule de café (10) à agencer ou à recevoir contre le dispositif de remplissage (1) peut être encliquetée et/ou le bord et/ou le fond de la capsule de café (10) peut être encliqueté au moins par endroits dans l'évidement de réception (4).

3. Dispositif de remplissage (1) selon au moins une des revendications précédentes,
**caractérisé en ce que**
le au moins premier élément de guidage (2) suit au moins par endroits un tracé essentiellement en forme d'anneau circulaire et/ou l'évidement de réception (4) suit au moins par endroits, de préférence complètement,
un tracé en forme d'anneau circulaire.

4. Dispositif de remplissage (1) selon au moins une des revendications précédentes,
**caractérisé en ce que**
le dispositif d'arrêt (6) présente au moins un dispositif de serrage (8), de préférence au moins deux dispositifs de serrage (8), et/ou le dispositif d'arrêt (6) est adapté et déterminé pour créer une liaison par la force entre la capsule à remplir et le dispositif de remplissage (1).

5. Dispositif de remplissage (1) selon au moins une des revendications précédentes,
**caractérisé en ce que**
le dispositif d'arrêt (6) est conçu de telle sorte que la capsule de café (10) à remplir puisse être insérée, en particulier glissée, transversalement.

6. Dispositif de remplissage (1) selon au moins une des revendications précédentes,
**caractérisé en ce que**
il présente au moins un autre élément de guidage et le dispositif d'arrêt (6) prévoit la fixation en position de la capsule de café à remplir au moins par endroits entre le premier élément de guidage (2) et le au moins un autre élément de guidage, dans lequel de préférence le au moins premier élément de guidage (2) est sollicité par ressort relativement au au moins un autre élément de guidage.

7. Dispositif de remplissage (1) selon au moins une des revendications précédentes,
**caractérisé en ce que**
il présente un dispositif de compactage (16), lequel est adapté et déterminé pour compacter une poudre de café se trouvant dans la capsule de café agencée ou reçue au moyen d'un élément de compactage (12) pouvant être guidé le long d'un axe de compactage prédéfini.

8. Dispositif de remplissage (1) selon la revendication précédente,
**caractérisé en ce que**
l'élément de compactage (12) est sollicité par ressort de telle sorte que, dans un état de sortie, il soit maintenu dans une position supérieure au-dessus du premier élément de guidage (2) et, lorsqu'est surmontée la force de rappel élastique, puisse être guidé dans une position de compactage, en particulier au moins à la même hauteur que celle du premier élément de guidage (2) et en particulier de façon préférée en-dessous du premier élément de guidage (2).

9. Dispositif de remplissage (1) selon au moins une des revendications précédentes,
**caractérisé en ce que**
il présente un élément d'entonnoir (18).
